# EUROPEAN PATENT SPECIFICATION

(11) **EP 4 389 302 B1**
(45) Date of publication and mention of the grant of the patent: **02.09.2026**
(21) Application number: 24175158.5
(22) Date of filing: 28.03.2022
(51) Int. Cl.: B05B 15/65, F16L 41/02

(54) **FITTING AND GASKET**
BESCHLAG UND DICHTUNG
RACCORD ET JOINT

(30) Priority: 06.04.2021 US 202163171103 P
(43) Date of publication of application: 26.06.2024
(62) Document number(s) of the earlier application(s) in accordance with Art. 76 EPC: 22785162.3 / 4 319 889
(73) Proprietor: Victaulic Company, Easton, PA 18040-6714 (US)
(72) Inventor: BARBOUR, Nicholas, Quakertown, PA, 18951 (US); MADARA, Scott, D., Nazareth, PA, 18064 (US); BOWMAN, Matthew A., Palmer, PA, 18045 (US)
(74) Representative: Meissner Bolte Partnerschaft mbB

(56) References cited:
- WO-A1-2021/014318
- US-A1- 2013 037 281
- US-A1- 2018 222 027
- US-A1- 2018 259 108

## Description

### Field of the Invention

This invention relates to gaskets and threaded fittings for forming fluid tight joints.

### Background

The connection of threaded fluid control components such as sprinklers to tapered threaded fittings in a fire suppression system traditionally requires a sealing compound (known as "pipe dope") to be applied to the male threads of the component to ensure a fluid tight joint at the threaded engagement between fitting and component. A more modern approach to ensure a fluid tight joint involves wrapping the male threads in a sealing tape comprising polytetrafluoroethylene before engaging the component with the fitting. Some have even gone as far as to apply pipe dope to a taped fitting.

Those steps, intended to produce a fluid tight joint, require additional time, effort and expense to effect. Further, even with care taken in the implementation of those steps, fit up of sprinklers to fittings still results in some percentage of leaking joints which require correction. There is clearly an opportunity to improve the installation of threaded components by eliminating such steps while still maintaining a fluid tight joint.
US 2018/222027 A1 discloses a gasket installation tool. The adapter is formed by an assembly of two components, wherein the components in the assembled state form a bore with a cylindrical portion and a threaded portion. The cylindrical portion forms a gasket chamber with a shoulder surface.
WO 2021/014318 A1 discloses a sprinkler head adapter comprising a body and a cap with a threaded portion. To form a cylindrical portion for the gasket with a shoulder surface the body and the cap need to be assembled.

### Summary

The invention concerns a fitting. An example fitting may comprise a reducer fitting, an elbow fitting, a tee fitting or a cross fitting. In an example embodiment the fitting comprises a conduit having an inlet and an outlet connected to one another via a bore extending therebetween. The conduit comprises a surface surrounding and defining the bore. A first portion of the surface is positioned proximate to the outlet. The first portion comprises threads extending along the bore. The threads may comprise straight threads, and the straight threads may comprise NPSL threads for example. In another example the threads may comprise tapered threads. A second portion of the surface is positioned between the first portion and the inlet. In an example not falling under the invention the second portion defines a truncated cone. A base of the cone is positioned proximate to the inlet. The cone defines a redirection space within the bore. A shoulder surface is positioned at the inlet. The shoulder surface projects into the bore. The shoulder surface faces the outlet and is oriented transversely and non-perpendicularly with respect to an axis arranged coaxially with the bore.

In a further example the fitting comprises a third portion of the surface positioned between the first and second portions thereof. The third portion defines a cylindrical shape.

According to the invention the fitting further comprises a gasket positioned within the bore between the first and second portions of the surface. The gasket comprises an outer surface facing away from the axis and an inner surface facing the axis. The outer surface of the gasket may have a length greater than a length of the third portion of the surface. The outer surface of the gasket has a cylindrical shape. According to the invention the inner surface of the gasket comprises a first land positioned proximate to the first portion of the surface. The first land is angularly oriented with respect to the axis such that an inner diameter of the gasket is greater at a point proximate to the first portion of the surface than a point distal thereto. Further by way of example the inner surface of the gasket may further comprise a second land positioned proximate to the second portion of the surface. The second land is angularly oriented with respect to the axis such that an inner diameter of the gasket is greater at a point proximate to the inlet than a point distal thereto. In an example embodiment the second land has a surface area greater than a surface area of the first land.

By way of example the fitting according to the invention may further comprise a sprinkler or other fluid control component threadedly received within the bore at the outlet, an end of the sprinkler engaging the first land. The sprinkler or other fluid control component may comprise straight threads and the straight threads may comprise NPSL threads. In another example the sprinkler or other fluid control component may comprise tapered threads. In an example embodiment the end of the sprinkler may comprise a chamfer. The chamfer may have an angular orientation the same as that of the first land. Engagement between the sprinkler and the first land compresses the gasket against the shoulder surface.

A fitting according to the invention comprises a conduit having an inlet and an outlet connected to one another via a bore extending therebetween. The conduit comprises a surface surrounding and defining the bore. A first portion of the surface, positioned proximate to the outlet, comprising threads extending along the bore. A second portion of the surface, positioned between the first portion and the inlet, defines a cylindrical shape. A shoulder surface is positioned at the inlet and projects into the bore. The shoulder surface faces the outlet and is oriented transversely and non-perpendicularly with respect to an axis arranged coaxially with the bore. The example fitting may comprise a reducer fitting and an escutcheon positioned at the outlet of the fitting.

The invention also encompasses a method of sealing a threaded sprinkler to a fitting defining a conduit having a threaded outlet using a gasket positioned within the conduit. In an example embodiment the method comprises:
rotating the threaded sprinkler within the threaded outlet so as to advance the sprinkler into engagement with an angularly oriented land of the gasket;
continue rotating the threaded sprinkler so as to compress the gasket both longitudinally within the conduit and radially outwardly against the conduit.

The method may further comprise engaging threads of the threaded sprinkler with the land.

### Brief Description of the Drawings

Figure 1 is a longitudinal sectional view of an example fitting and gasket engaged with a sprinkler, which illustrate the invention but are not part of it.;
Figure 2 is a longitudinal sectional view of a portion of the fitting shown in Figure 1 on an enlarged scale;
Figure 3 is a longitudinal sectional view of the example gasket shown in Figure 1 on an enlarged scale;
Figures 4-7 are longitudinal sectional views illustrating installation of a component into the fitting shown in Figure 1; and
Figures 8-12 are longitudinal sectional views of different example embodiments of fittings, which illustrate the invention but are not part of it; and
Figures 13-14 are longitudinal sectional views of different example embodiments of fittings according to the invention.

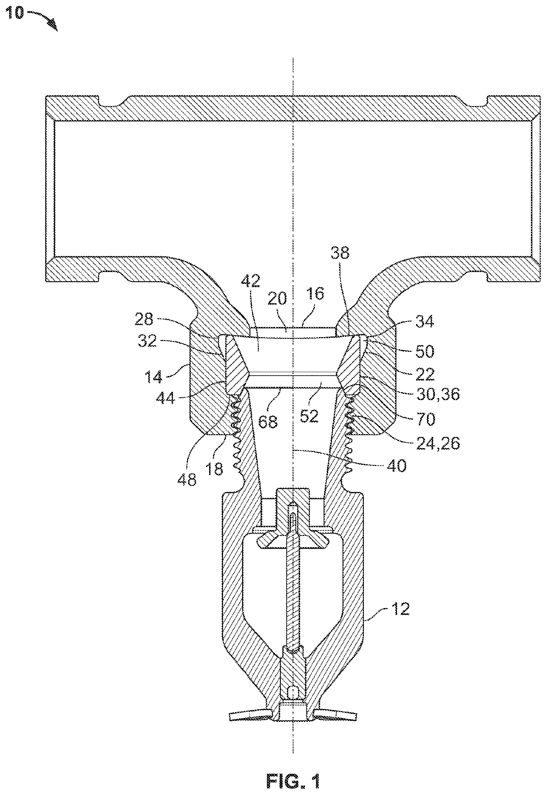

Figures 1 to 12 serve as examples for general understanding, but are not covered by the invention.

### Detailed Description

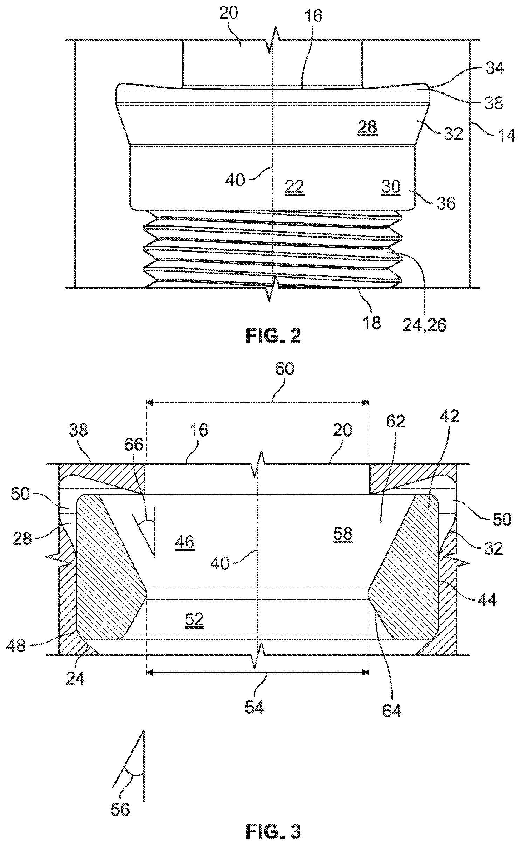

Figure 1 shows an example embodiment of a fitting 10, which illustrate the invention but is not part of it. In this example the fitting 10 is a "Tee" for connecting fluid control devices, such as the example sprinkler 12 in a piping run (not shown). Example fitting 10 comprises a conduit 14 having an inlet 16 and an outlet 18 connected to one another via a bore 20. As shown in Figure 2, conduit 14 comprises a surface 22 surrounding and defining the bore 20. A first portion 24 of the surface 22 positioned proximate to the outlet 18 comprises female threads 26 extending along the bore 20. In this example, threads 26 are straight threads such as NPSL threads, which may be advantageously used to connect fitting 10 with fluid control devices such as sprinklers, which may have straight male threads. However, threads 26 could also be tapered threads. A second portion 28 of the surface 22 is positioned between the first portion 24 and the inlet 16. A third portion 30 of the surface 22 may be positioned between the first and second portions 24 and 28. The second portion 28 of surface 22 advantageously defines a truncated cone 32. The base 34 of the cone 32 is positioned proximate to the inlet 16. When present, the third portion 30 defines a substantially cylindrical shape 36.

A shoulder surface 38 is positioned at the inlet 16. Shoulder surface 38 projects into the bore 20 and faces the outlet 18. Shoulder surface 38 is oriented transversely and non-perpendicularly with respect to an axis 40 arranged coaxially with the bore 20 thereby providing a dovetail shape to the second portion 28 of surface 22 when viewed in longitudinal section as shown in Figures 1 and 2. This angular orientation of shoulder surface 38 guides the deformation behavior of a gasket 42 positioned within the bore 20 between the first and second portions 24 and 28 of surface 22 as described below.

Gasket 42 is advantageously formed of an elastomer such as EPDM and, as shown in Figure 3, comprises an outer surface 44 facing away from the axis 40 and an inner surface 46 facing the axis. In this example embodiment the outer surface 44 has a cylindrical shape with a radius of curvature substantially matched to that of the third portion 30 of surface 22. As shown in Figure 1, the outer surface 44 overlaps both the third and second portions 30, 28 of the surface 22, the length of the outer surface 44 of gasket 42 being greater than the length of the third portion 30 of surface 22. Gasket 42 is seated between the shoulder surface 38 and an undercut 48 marking a boundary between the first and third portions 24 and 30 of surface 22. Note that the truncated cone 32 defined by second portion 28 defines a redirection space 50 into which the gasket may deform when compressed.

As shown in Figure 3, the inner surface 46 of the gasket 42 comprises a first land 52 positioned proximate to the first portion 24 of surface 22 when installed in bore 20. The first land 52 is angularly oriented with respect to the axis 40 such that an inner diameter 54 of the gasket is greater at a point proximate to the first portion 24 than a point distal thereto. For a practical design, orientation angles 56 of first land 52 may range from 25° to 50° with an angle from about 30°- 45° being considered advantageous.

As further shown in Figure 3, the inner surface 46 of the gasket 42 may further comprise a second land 58 positioned proximate to the second portion 28 of surface 22. In this example the second land 58 is also angularly oriented with respect to the axis 40 but with a slope opposite of the first land such that an inner diameter 60 of the gasket 42 is greater at a point proximate to the inlet 16 than a point distal thereto. To provide pressure responsiveness to gasket 42 the second land 58 has a surface area 62 greater than a surface area 64 of the first land 52. Orientation angles 66 of the second land may range from 20° to 60° with an angle of about 25° being considered advantageous for a practical design.

As shown in Figure 1, the fitting 10 and gasket 42 may be used to attach tapered threaded sprinkler 12 or another fluid control component in a piping network of a fire suppression system for example. Sprinkler 12 is threadedly received within the bore 20 at the outlet 18, an end 68 of the sprinkler engaging the first land 52. The end 68 of the sprinkler 12 usually comprises a chamfer 70, and it is thought advantageous if the chamfer has an angular orientation the same as that of the first land 52.

When installed as described below, it is expected that a fluid tight seal between tapered threaded sprinkler 12 and fitting 10 will be achieved for straight threads 26 without the need for pipe tape or pipe dope.

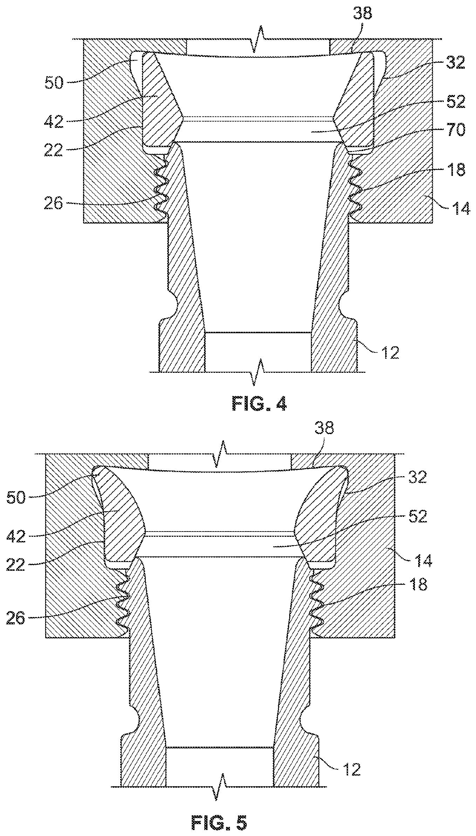

An example method of sealing the tapered threaded sprinkler 12 to the fitting 10 begins as shown in Figures 1 and 4 by rotating the threaded sprinkler 12 within the straight threaded outlet 18 so as to advance the sprinkler into engagement with the angularly oriented first land 52 of the gasket 42. Figure 4 shows in detail first contact between the sprinkler 12 and the gasket 42. Note that the chamfer 70 engages the first land 52 at substantially the same orientation angle in this example. The method describes the invention but is not part of it

Next, as shown in Figure 5, rotation of the threaded sprinkler 12 continues so as to compress the gasket 42 both longitudinally within the conduit 14 (compression against shoulder surface 38) and radially outwardly against the inner surface 22 of the conduit. The angular orientation of the first land 52 is responsible for the radial compression of the gasket 42 as the sprinkler 12 advances as is apparent from a resolution of the force vectors at the sprinkler-gasket interface. Figure 5 illustrates one full turn of the sprinkler 12 after first contact of Figure 4.

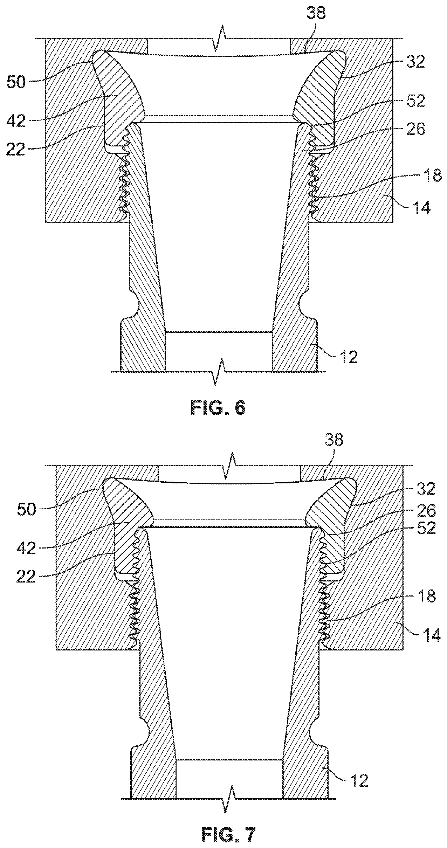

Figure 6 shows the sprinkler 12 seated within the conduit 14 and in sealing engagement. Note that the gasket 42, being substantially incompressible, has deformed into the redirection space 50 defined by the cone 32 of the inner surface 22. Deformation of the gasket 42 into the redirection space 50 is guided by the angular orientation of shoulder surface 38 against which the gasket is compressed. It is further observed that threads 26 of the sprinkler 12 engage the first land 52 and provide additional sealing effect. Figure 6 illustrates two full turns of the sprinkler 12 after first contact of Figure 4.

Figure 7 shows the sprinkler 12, gasket 42 and conduit 14 at three complete turns after first contact of Figure 4. While an effective seal is achieved at or before one turn after first contact, it is expected that the fitting 10 and gasket 42 will maintain a fluid tight seal up to at least three turns past first contact, and may even provide additional sealing effect in this rotational range. The seal and fitting is thus expected to permit advantageous adjustability of the angular position of the sprinkler 12 to effect desired orientation of the frame arms and deflector of the sprinkler without compromising the integrity of the seal. Axial position of the sprinkler relative to the fitting 10 is also adjustable using the seal and fitting.

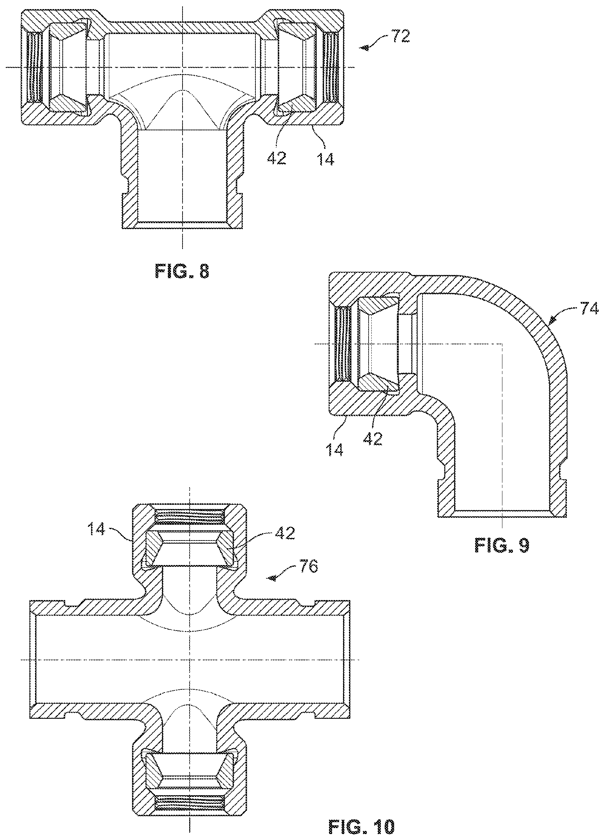

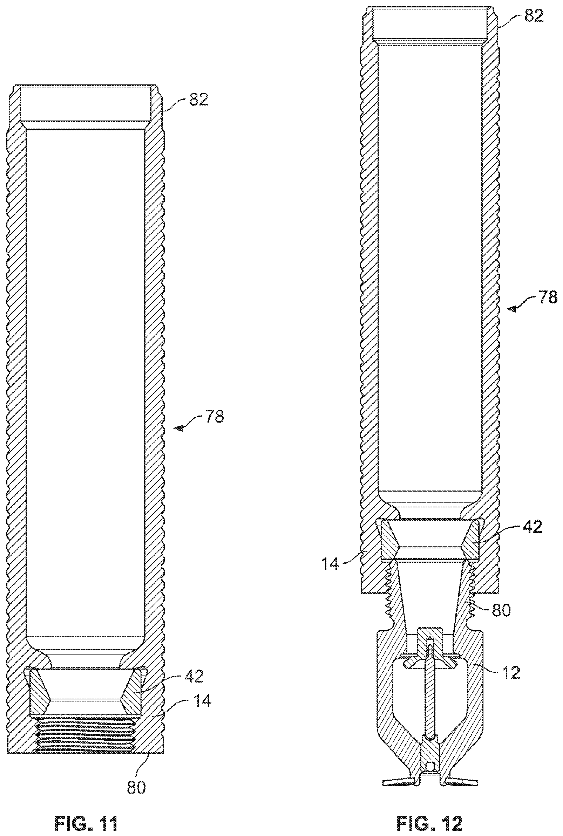

Figures 8-12 show additional example which illustrate the invention but are not part of it, including a Tee 72 having two conduits 14 and gaskets 42 (Figure 8), a 90° elbow fitting 74 having one conduit 14 and one gasket 42 (Figure 9), and a cross fitting 76 having two conduits 14 and two gaskets 42 in opposition (Figure 10). Figure 11 shows a cross section of a reducer fitting 78 which can receive a sprinkler 12 at one end 80 thereof. The opposite end 82 of reducer fitting 78 may be connected to a flexible conduit.

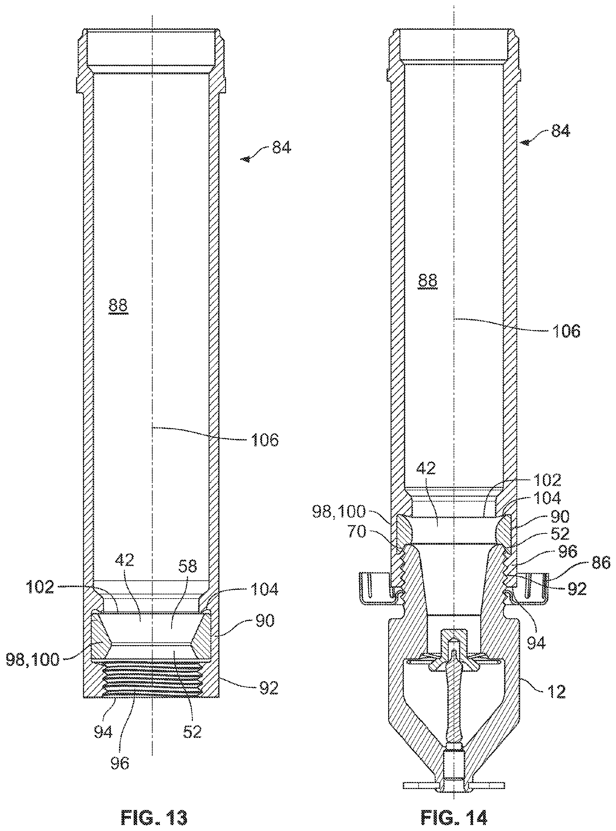

While it is advantageous for the example embodiments of the fittings shown in Figures 1-12 to comprise a redirection space 50, the example gasket 42 may be used effectively with fittings having no redirection space. An embodiment according to the invention of such a fitting 84 is shown in Figures 13 and 14. Example fitting 84 is a reducer fitting which is likely to be used with an escutcheon 86 when receiving a sprinkler 12 as shown in Figure 14. Figure 13 shows the reducer 84 wherein an example gasket 42 having lands 52 and 58 as described above is received within the bore 88 of fitting 84. A surface 90, which defines a portion of the bore 88, surrounds the gasket 42. Surface 90 comprises a first portion 92 positioned proximate to an outlet 94 of the fitting 84. Surface portion 92 comprises threads 96 to receive the threaded sprinkler 12 as shown in Figure 14. Unlike the previously described example embodiments, surface 92 does not comprise a truncated cone portion, but comprises a second portion 98 defining a cylindrical shape 100 positioned between the first portion 92 and an inlet 102. A shoulder surface 104 is positioned at the inlet 102 and projects into the bore 88. Shoulder surface 104 faces the outlet 94 and is oriented transversely and non-perpendicularly with respect to an axis 106 arranged coaxially with the bore 88. Shoulder surface 104 thus provides a dovetail shape to the second portion 98 when viewed in longitudinal section as shown in Figures 13 and 14. As shown in Figure 14, the angular orientation of the shoulder surface 104 guides the deformation behavior of gasket 42 when it is engaged by the sprinkler 12.

Figure 14 shows the sprinkler 12 sealingly seated against the gasket 42, the sprinkler's chamfer 70 engaging the gasket's first land 52. Gasket 42 is thus compressed against the shoulder surface 104, the gasket being securely fixed between the shoulder surface 104 and the sprinkler 12.

Seals and fittings according to the invention are expected to afford more reliable joints, with less tendency to leak while being usable with both tapered and straight threads without sealing tape or pipe dope. It is further expected that less time and effort will be needed to form the joints, as there will be less preparatory work and less torque is required to secure the components in a fluid-tight manner.

## Claims

1. A fitting (84), said fitting (84) comprising:
a conduit (14) having an inlet (102) and an outlet (94) connected to one another via a bore (88) extending therebetween, said conduit (14) comprising a surface (90) surrounding and defining said bore (88);
a first portion (92) of said surface (90) positioned proximate to said outlet (94) comprising threads extending along said bore (88);
a second portion (98) of said surface (90) positioned between said first portion (92) and said inlet (102) defining a cylindrical shape (100);
a shoulder surface (104) positioned at said inlet (102) and projecting into said bore (88), said shoulder surface (104) facing said outlet (94) and oriented transversely and non-perpendicularly with respect to an axis (106) arranged coaxially with said bore (88); and
a gasket (42) positioned within said bore (88) between said first and second portions (92, 98) of said surface (90), said gasket (42) comprising an outer surface (44) facing away from said axis (106) and an inner surface (46) facing said axis (106), **characterized in that**,
in an uncompressed state, said inner surface (46) of said gasket (42) comprises a first land positioned proximate to said first portion (92) of said surface, said first land (52) being angularly oriented with respect to said axis (106) such that an inner diameter (54) of said gasket (42) is greater at a point proximate to said first portion (92) of said surface (90) than a point distal thereto.

2. The fitting (84) according to claim 1, wherein said threads comprise tapered threads.

3. The fitting (84) according to claim 1, wherein said threads comprise straight threads.

4. The fitting (84) according to claim 3, wherein said straight threads comprise NPSL threads.

5. The fitting (84) according to claim 1, wherein said outer surface (44) of said gasket (42) has a cylindrical shape.

6. The fitting (84) according to claim 1, wherein said inner surface (46) of said gasket (42) further comprises a second land (58) positioned proximate to said second portion of said surface, said second land (58) being angularly oriented with respect to said axis (106) such that an inner diameter (54) of said gasket (42) is greater at a point proximate to said inlet (102) than a point distal thereto.

7. The fitting (84) according to claim 6, wherein said second land (58) has a surface area greater than a surface area of said first land (52).

8. The fitting (84) according to claim 1, further comprising a sprinkler (12) or other fluid control component threadedly received within said bore (88) at said outlet (94), an end of said sprinkler (12) engaging said first land (52).

9. The fitting (84) according to claim 8, wherein said sprinkler (12) or other fluid control component comprises straight threads.

10. The fitting (84) according to claim 9, wherein said straight threads comprise NPSL threads.

11. The fitting (84) according to claim 10, wherein said sprinkler (12) or other fluid control component comprises tapered threads.

12. The fitting (84) according to claim 8, wherein said end of said sprinkler (12) comprises a chamfer, said chamfer having an angular orientation the same as that of said first land (52).

13. The fitting (84) according to claim 8, wherein engagement between said sprinkler (12) and said first land (52) compresses said gasket (42) against said shoulder surface (104).

14. The fitting (84) according to claim 1, wherein said fitting (84) comprises a reducer fitting.

15. The fitting (84) according to claim 14, further comprising an escutcheon positioned at said outlet (94) of said fitting.

16. A method of sealing a threaded sprinkler to a fitting (84) according to one of the preceding claims said method comprising:
rotating said threaded sprinkler within said threaded outlet (94) so as to advance said sprinkler into engagement with said angularly oriented land of said gasket (42);
continue rotating said threaded sprinkler so as to compress said gasket (42) both longitudinally within said conduit (14) and radially outwardly against said conduit (14).

17. The method according to claim 16, further comprising engaging threads of said threaded sprinkler with said land.

## Patentansprüche

1. Fitting (84), wobei das Fitting (84) umfasst:
einen Kanal (14) mit einem Einlass (102) und einem Auslass (94), die über eine Bohrung (88), die sich dazwischen erstreckt, miteinander verbunden sind, wobei der Kanal (14) eine Oberfläche (90) umfasst, die die Bohrung (88) umgibt und definiert;
einen nahe dem Auslass (94) positionierten ersten Abschnitt (92) der Oberfläche (90), der Gewindegänge umfasst, die sich entlang der Bohrung (88) erstrecken;
einen zwischen dem ersten Abschnitt (92) und dem Einlass (102) positionierten zweiten Abschnitt (98) der Oberfläche (90), der eine zylindrische Form (100) definiert;
eine Schulterfläche (104), die an dem Einlass (102) positioniert ist und in die Bohrung (88) hineinragt, wobei die Schulterfläche (104) dem Auslass (94) zugewandt und quer und nicht senkrecht zu einer Achse (106) ausgerichtet ist, die koaxial mit der Bohrung (88) angeordnet ist; und
eine Dichtung (42), die innerhalb der Bohrung (88) zwischen dem ersten und dem zweiten Abschnitt (92, 98) der Oberfläche (90) positioniert ist, wobei die Dichtung (42) eine von der Achse (106) abgewandte Außenfläche (44) und eine der Achse (106) zugewandte Innenfläche (46) umfasst, **dadurch gekennzeichnet, dass**,
in einem unkomprimierten Zustand, die Innenfläche (46) der Dichtung (42) einen ersten Steg umfasst, der nahe dem ersten Abschnitt (92) der Oberfläche positioniert ist, wobei der erste Steg (52) derart winklig zur Achse (106) ausgerichtet ist, dass ein Innendurchmesser (54) der Dichtung (42) an einem Punkt in der Nähe des ersten Abschnitts (92) der Oberfläche (90) größer als an einem davon entfernten Punkt ist.

2. Fitting (84) nach Anspruch 1, wobei die Gewindegänge konische Gewindegänge umfassen.

3. Fitting (84) nach Anspruch 1, wobei die Gewindegänge gerade Gewindegänge umfassen.

4. Fitting (84) nach Anspruch 3, wobei die geraden Gewindegänge NPSL-Gewindegänge umfassen.

5. Fitting (84) nach Anspruch 1, wobei die Außenfläche (44) der Dichtung (42) eine zylindrische Form aufweist.

6. Fitting (84) nach Anspruch 1, wobei die Innenfläche (46) der Dichtung (42) ferner einen zweiten Steg (58) umfasst, der nahe dem zweiten Abschnitt der Oberfläche positioniert ist, wobei der zweite Steg (58) derart winklig zur Achse (106) ausgerichtet ist, dass ein Innendurchmesser (54) der Dichtung (42) an einem Punkt in der Nähe des Einlasses (102) größer als an einem davon entfernten Punkt ist.

7. Fitting (84) nach Anspruch 6, wobei der zweite Steg (58) einen Flächeninhalt aufweist, der größer als ein Flächeninhalt des ersten Stegs (52) ist.

8. Fitting (84) nach Anspruch 1, ferner umfassend einen Sprinkler (12) oder eine andere Fluidsteuerkomponente, die im Gewindeeingriff innerhalb der Bohrung (88) an dem Auslass (94) aufgenommen ist, wobei ein Ende des Sprinklers (12) mit dem ersten Steg (52) in Eingriff ist.

9. Fitting (84) nach Anspruch 8, wobei der Sprinkler (12) oder die andere Fluidsteuerkomponente gerade Gewindegänge umfasst.

10. Fitting (84) nach Anspruch 9, wobei die geraden Gewindegänge NPSL-Gewindegänge umfassen.

11. Fitting (84) nach Anspruch 10, wobei der Sprinkler (12) oder die andere Fluidsteuerkomponente konische Gewindegänge umfasst.

12. Fitting (84) nach Anspruch 8, wobei das Ende des Sprinklers (12) eine Fase umfasst, wobei die Fase eine winklige Ausrichtung aufweist, die gleich der des ersten Stegs (52) ist.

13. Fitting (84) nach Anspruch 8, wobei der Eingriff zwischen dem Sprinkler (12) und dem ersten Steg (52) die Dichtung (42) gegen die Schulterfläche (104) komprimiert.

14. Fitting (84) nach Anspruch 1, wobei das Fitting (84) ein Reduzierstück umfasst.

15. Fitting (84) nach Anspruch 14, ferner umfassend eine Rosette, die an dem Auslass (94) des Fittings positioniert ist.

16. Verfahren zum Abdichten eines mit einem Gewinde versehenen Sprinklers an einem Fitting (84) nach einem der vorhergehenden Ansprüche, wobei das Verfahren umfasst:
Drehen des mit einem Gewinde versehenen Sprinklers innerhalb des Gewindeauslasses (94), um den Sprinkler in Eingriff mit dem winklig ausgerichteten Steg der Dichtung (42) vorwärtszubewegen;
Weiterdrehen des mit einem Gewinde versehenen Sprinklers, um die Dichtung (42) sowohl in Längsrichtung innerhalb des Kanals (14) als auch radial nach außen gegen den Kanal (14) zu komprimieren.

17. Verfahren nach Anspruch 16, ferner umfassend das Ineingriffbringen von Gewindegängen des mit einem Gewinde versehenen Sprinklers mit dem Steg.

## Revendications

1. Raccord (84), ledit raccord (84) comprenant :
un conduit (14) présentant une entrée (102) et une sortie (94) reliées l'une à l'autre par l'intermédiaire d'un trou (88) s'étendant entre elles, ledit conduit (14) comprenant une surface (90) entourant et définissant ledit trou (88) ;
une première partie (92) de ladite surface (90) positionnée à proximité de ladite sortie (94) comprenant des filetages s'étendant le long dudit trou (88) ;
une seconde partie (98) de ladite surface (90) positionnée entre ladite première partie (92) et ladite entrée (102) définissant une forme cylindrique (100) ;
une surface d'épaulement (104) positionnée au niveau de ladite entrée (102) et faisant saillie dans ledit trou (88), ladite surface d'épaulement (104) étant orientée vers ladite sortie (94) et étant orientée transversalement et non perpendiculairement par rapport à un axe (106) agencé de manière coaxiale avec ledit trou (88) ; et
un joint d'étanchéité (42) positionné à l'intérieur dudit trou (88) entre lesdites première et seconde parties (92, 98) de ladite surface (90), ledit joint d'étanchéité (42) comprenant une surface externe (44) orientée à l'opposé dudit axe (106) et une surface interne (46) orientée vers ledit axe (106), **caractérisé en ce que**,
dans un état non comprimé, ladite surface interne (46) dudit joint d'étanchéité (42) comprend un premier méplat positionné à proximité de ladite première partie (92) de ladite surface, ledit premier méplat (52) étant orienté angulairement par rapport audit axe (106) de telle sorte qu'un diamètre interne (54) dudit joint d'étanchéité (42) est plus grand en un point à proximité de ladite première partie (92) de ladite surface (90) qu'en un point distal par rapport à celle-ci.

2. Raccord (84) selon la revendication 1, lesdits filetages comprenant des filetages coniques.

3. Raccord (84) selon la revendication 1, lesdits filetages comprenant des filetages droits.

4. Raccord (84) selon la revendication 3, lesdits filetages droits comprenant des filetages NPSL.

5. Raccord (84) selon la revendication 1, ladite surface externe (44) dudit joint d'étanchéité (42) présentant une forme cylindrique.

6. Raccord (84) selon la revendication 1, ladite surface interne (46) dudit joint d'étanchéité (42) comprenant en outre un second méplat (58) positionné à proximité de ladite seconde partie de ladite surface, ledit second méplat (58) étant orienté angulairement par rapport audit axe (106) de telle sorte qu'un diamètre interne (54) dudit joint d'étanchéité (42) est plus grand en un point à proximité de ladite entrée (102) qu'en un point distal par rapport à celle-ci.

7. Raccord (84) selon la revendication 6, ledit second méplat (58) présentant une aire de surface plus grande qu'une aire de surface dudit premier méplat (52).

8. Raccord (84) selon la revendication 1, comprenant en outre un gicleur (12) ou un autre composant de régulation de fluide logé par filetage à l'intérieur dudit trou (88) au niveau de ladite sortie (94), une extrémité dudit gicleur (12) venant en prise avec ledit premier méplat (52).

9. Raccord (84) selon la revendication 8, ledit gicleur (12) ou un autre composant de régulation de fluide comprenant des filetages droits.

10. Raccord (84) selon la revendication 9, lesdits filetages droits comprenant des filetages NPSL.

11. Raccord (84) selon la revendication 10, ledit gicleur (12) ou autre composant de régulation de fluide comprenant des filetages coniques.

12. Raccord (84) selon la revendication 8, ladite extrémité dudit gicleur (12) comprenant un chanfrein, ledit chanfrein présentant une orientation angulaire identique à celle dudit premier méplat (52).

13. Raccord (84) selon la revendication 8, la mise en prise entre ledit gicleur (12) et ledit premier méplat (52) comprimant ledit joint d'étanchéité (42) contre ladite surface d'épaulement (104).

14. Raccord (84) selon la revendication 1, ledit raccord (84) comprenant un raccord réducteur.

15. Raccord (84) selon la revendication 14, comprenant en outre un écusson positionné au niveau de ladite sortie (94) dudit raccord.

16. Procédé de scellement d'un gicleur fileté à un raccord (84) selon l'une des revendications précédentes, ledit procédé comprenant :
la rotation dudit gicleur fileté à l'intérieur de ladite sortie filetée (94) de manière à faire avancer ledit gicleur en prise avec ledit méplat orienté angulairement dudit joint d'étanchéité (42) ;
la poursuite de la rotation dudit gicleur fileté de manière à comprimer ledit joint d'étanchéité (42) à la fois longitudinalement à l'intérieur dudit conduit (14) et radialement vers l'extérieur contre ledit conduit (14).

17. Procédé selon la revendication 16, comprenant en outre la mise en prise de filetages dudit gicleur fileté avec ledit méplat.
